# FASCICULE DE BREVET EUROPEEN

(11) **EP 2 943 730 B1**
(45) Date de publication et mention de la délivrance du brevet: **12.10.2016**
(21) Numéro de dépôt: 14703145.4
(22) Date de dépôt: 14.01.2014
(51) Int. Cl.: H02S 20/10, F24J 2/52, F24J 2/00

(54) **POSITIONNEMENT DE MODULES D'UNE CENTRALE SOLAIRE**
POSITIONIERUNG VON MODULEN EINES SOLARKRAFTWERKS
POSITIONING OF MODULES OF A SOLAR POWER PLANT

(30) Priorité: 14.01.2013 FR 1350310
(43) Date de publication de la demande: 18.11.2015
(73) Titulaire: Commissariat à l'Énergie Atomique et aux Énergies Alternatives, 75015 Paris (FR)
(72) Inventeur: RAZONGLES, Guillaume, F-11000 Carcassonne (FR); MERTEN, Jens, F-73100 Tresserve (FR)
(74) Mandataire: Thibon, Laurent
(86) Numéro de dépôt international: PCT/FR2014/050066
(87) Numéro de publication internationale: WO 2014/108656

(56) Documents cités:
- JP-A- H10 210 777
- PAVLOVIC T ET AL: "Assessment of the possibilities of building integrated PV systems of 1kW electricity generation in Banja Luka", , 2012, XP002714102, Extrait de l'Internet: URL:http://www.google.nl/url?sa=t&rct=j&q= &esrc=s&frm=1&source=web&cd=3&ved=0CDsQFjA C&url=http%3A%2F%2Fdoisrpska.nub.rs%2Finde x.php%2Fconterporarymaterials3-1%2Farticle %2Fdownload%2F554%2F508&ei=9y1MUsaXLMrh4QS RnoHADg&usg=AFQjCNFEt2BEchLDc7H-ywwyT-MsBr vFhQ [extrait le 2013-10-01]
- KASAHARA N ET AL: "Performance evaluation of bifacial photovoltaic modules for urban application", PROCEEDINGS OF THE 3RD WORLD CONFERENCE ON PHOTOVOLTAIC ENERGY CONVERSION : JOINT CONFERENCE OF 13TH PV SCIENCE & ENGINEERING CONFERENCE, 30TH IEEE PV SPECIALISTS CONFERENCE, 18TH EUROPEAN PV SOLAR ENERGY CONFERENCE; OSAKA INTERNATIONAL CONGRESS CENT, 18 mai 2003 (2003-05-18), page 2455, XP031987825, ISBN: 978-4-9901816-0-4

## Description

La présente demande de brevet revendique la priorité de la demande de brevet français FR13/50310 qui sera considérée comme faisant partie intégrante de la présente description.

### Domaine de l'invention

La présente invention concerne la réalisation d'installations comportant des modules photovoltaïques et, plus particulièrement, la réalisation d'une centrale solaire à base d'un ensemble de modules photovoltaïques.

### Exposé de l'art antérieur

Les systèmes photovoltaïques destinés à produire de l'énergie électrique à partir de l'énergie solaire sont généralement formés d'un ensemble de modules photovoltaïques, chacun regroupant des cellules photovoltaïques connectées entre-elles. Chaque module est généralement assorti d'un cadre métallique pour assurer sa rigidité et améliorer son étanchéité.

Les modules photovoltaïques sont, dans une centrale solaire, généralement répartis en rangées parallèles, et inclinés par rapport à l'horizontale pour capter au mieux les rayons solaires. En pratique, on fixe les modules photovoltaïques sur des supports rigides, par exemple une façade, une toiture ou un châssis.

La fixation des modules sur ces supports rigides doit assurer la résistance aux vents. Le coût de ces supports rigides et celui de leur mise en oeuvre représentent une partie importante du coût final de la centrale photovoltaïque.

Par ailleurs, il existe des modules qui ont la particularité d'être biface, c'est-à-dire qu'ils reçoivent et utilisent l'énergie lumineuse qui leur parvient des deux côtés. Ce type de modules laisse généralement passer une partie de la lumière, et on les utilise alors comme ombrière. On peut aussi les fixer verticalement et les orienter de façon est-ouest.

Le document JP-A-10-210777 décrit un dispositif formant une tour portant des panneaux solaires incluant des panneaux inclinés et des panneaux verticaux.

### Résumé

Un objet d'un mode de réalisation de la présente invention selon un premier aspect est de proposer une architecture de centrale solaire qui pallie au moins une partie des inconvénients liés à la fixation des modules tout en restant performant.

Un autre objet d'un mode de réalisation de la présente invention selon un deuxième aspect est d'accroitre, à encombrement au sol donné, la capacité de production d'une centrale solaire.

Un autre objet d'un mode de réalisation de la présente invention est de faciliter la tenue aux vents des modules photovoltaïques d'une centrale solaire.

Pour atteindre tout ou partie de ces objets ainsi que d'autres, on prévoit une centrale selon la revendication 1.

Des modes réalisations particuliers sont décrits ans les sous revendications.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une représentation schématique et en perspective d'un exemple d'installation photovoltaïque montée sur châssis sur un terrain ou une toiture plate ;
la figure 2 est une représentation schématique et en perspective d'un exemple d'installation photovoltaïque verticale comportant des modules bifaces ;
la figure 3 est une représentation en perspective d'un élément de base d'un mode de réalisation d'une centrale photovoltaïque ;
la figure 4 est une représentation schématique et en perspective d'un mode de réalisation d'une centrale photovoltaïque ;
la figure 5 illustre un détail d'un mode de réalisation d'un assemblage de modules dans la centrale de la figure 4 ;
la figure 6 représente un détail d'un autre mode de réalisation d'un assemblage de modules photovoltaïques dans la centrale de la figure 4 ; et
les figures 7 et 8 illustrent deux exemples d'élément d'assemblage.

### Description détaillée

De mêmes éléments ont été désignés par de mêmes références aux différentes figures qui ont été tracées sans respect d'échelle. Par souci de clarté, seuls les éléments utiles à la compréhension des modes de réalisation qui vont être décrits ont été détaillés. En particulier, la constitution des cellules photovoltaïques d'un module simple face ou biface n'a pas été détaillée, les modes de réalisation décrits étant compatibles avec les modules usuels. De plus, l'assemblage des différentes cellules photovoltaïques en module simple face ou biface n'a pas non plus été détaillé, les modes de réalisation décrits étant là encore compatibles avec les assemblages usuels de modules.

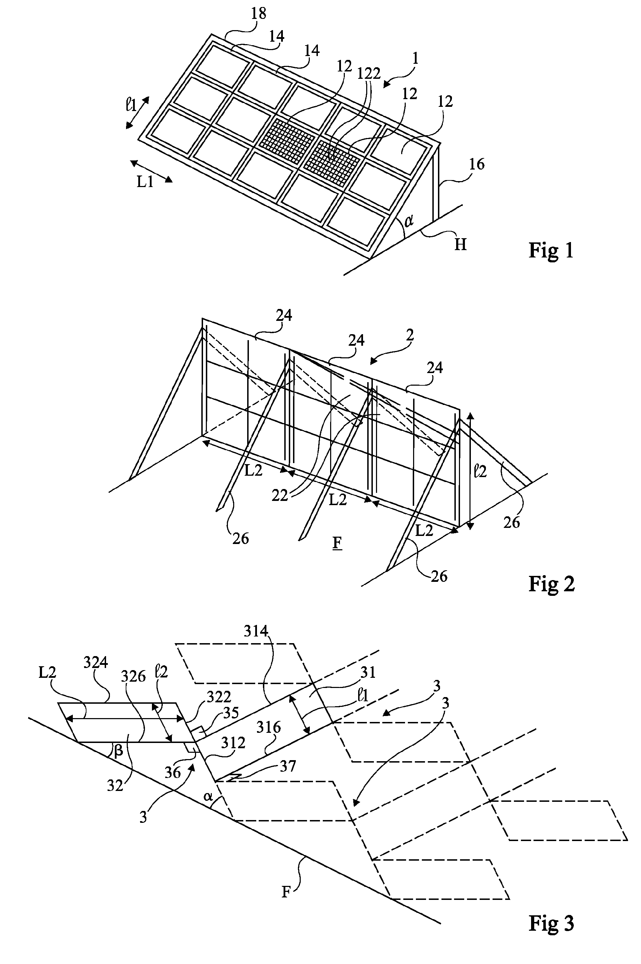

La figure 1 est une vue en perspective d'un exemple classique d'installation photovoltaïque 1 dans une inclinaison favorable à sa production annuelle. Cette installation 1 comporte habituellement un ensemble (le plus souvent une matrice) de modules élémentaires 12, chaque module 12 étant constitué d'une matrice de cellules photovoltaïques 122. Chaque modules 12 est généralement serti d'un cadre métallique 14 destiné à être fixé à un support rigide 18 (châssis, charpente métallique en toiture ou en façade, etc.). Sur une plateforme, les châssis sont généralement formés de pieds et d'équerres. L'angle α que forme l'installation 1 par rapport à un plan horizontal H dépend de la localisation de l'installation et de l'encombrement voulu, par exemple sur la toiture.

La figure 2 représente un autre exemple de système photovoltaïque 2. Le système 2 comporte un ensemble de modules 22 bifaces disposés côte à côte. Un tel système 2 peut être placé verticalement et recevoir une partie du rayonnement par réflexion du sol F. La pose verticale des tels modules nécessite des pieds et des équerres pour chaque module.

Le besoin de structures de maintien fait partie du surcoût des centrales solaires.

Par ailleurs, les centrales inclinées du type de celle de la figure 1 et verticales du type de celle de la figure 2 ont leurs avantages propres qui sont aujourd'hui difficilement combinables dans une même centrale en raison de l'ombre mutuelle que sont susceptibles de se faire les modules entre eux.

Selon un premier aspect, les inventeurs prévoient de tirer profit de la présence d'un cadre (24, figure 2) autour des modules 2, afin d'utiliser de tels modules pour maintenir des modules inclinés du type de celui de la figure 1. En d'autres termes, on prévoit de se servir des modules bifaces comme étais de maintien des modules inclinés et vice versa.

Selon un deuxième aspect, les inventeurs prévoient de combiner des modules inclinés et des modules verticaux pour réaliser une centrale solaire mixte en minimisant l'ombrage des modules les uns sur les autres.

La figure 3 est une représentation schématique en perspective d'un mode de réalisation d'un élément de base 3 d'une centrale solaire. On utilise la notion d'élément de base pour faire ressortir que la centrale est réalisée par juxtaposition de plusieurs éléments de ce type. Toutefois, il n'est pas nécessaire que ces éléments soient pré-assemblés.

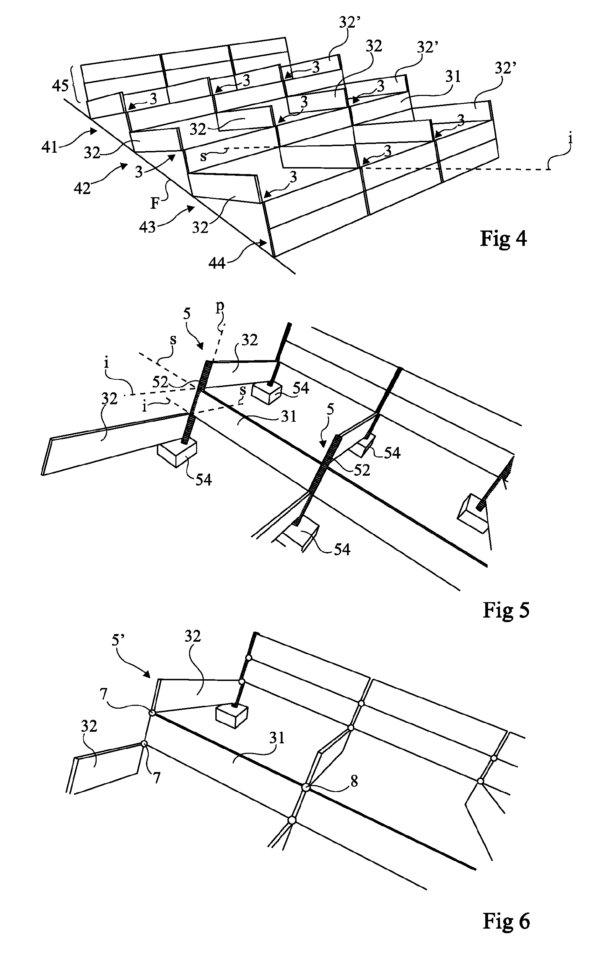

La figure 4 est une vue schématique en perspective d'un exemple de centrale réalisé au moyen d'éléments 3.

Un élément de base 3 comporte un module à montage incliné 31 associé à un module à montage vertical 32. Les modules ont la forme de panneaux plans. Par montage incliné, on entend un montage selon lequel le module 31 (le plan dans lequel s'inscrit sa plus grande surface) est dans un plan incliné (angle α) par rapport à un plan horizontal. Par montage vertical, on entend un montage selon lequel le module 32 (le plan dans lequel s'inscrit sa plus grande surface) est dans un plan approximativement perpendiculaire à un plan horizontal et de préférence perpendiculaire à un plan horizontal. Les modules 31 et 32 sont parallélépipédiques, de préférence rectangulaires et ont, de préférence, des petits côtés respectifs 312 et 322 de même longueur (11=12). On pourra toutefois envisager des modules carrés (cas particulier d'un rectangle).

L'inclinaison α, du module 31 est déterminée en tenant compte de la localisation de la centrale solaire et notamment de la latitude du lieu d'implantation, qui conditionne l'altitude du soleil à midi. De préférence, l'angle α est tel que la normale au plan dans lequel s'inscrit le module fait, avec un plan horizontal, un angle approximativement égal, de préférence égal, à l'élévation angulaire (altitude) du soleil à midi au solstice d'hiver. Cela optimise la production des modules inclinés.

De préférence, l'angle β entre le grand côté 324 ou 326 d'un module 32 et le plan horizontal est choisi pour minimiser l'ombrage du module incliné sur le module vertical et vice versa. L'angle β dépend donc de l'angle α d'inclinaison des modules 31 par rapport au plan horizontal. L'angle β est, de préférence approximativement égal, de préférence égal, à l'élévation angulaire du soleil à midi lors du solstice d'hiver. Un tel choix constitue, pour les inventeurs, un bon compromis pour minimiser l'ombre au cours des journées et optimiser la production annuelle du système.

Quand les modules sont rectangulaires, cela conduit à une réalisation préférée selon laquelle un petit côté 312 du module 31 est approximativement parallèle, de préférence approximativement aligné, de préférence aligné, sur un petit côté 322 du module 32, ce dernier étant situé au-dessus du petit côté 312.

Plus généralement, la disposition des modules (le choix des angles) est telle que, pour toute paire de modules incluant un module vertical et un module incliné, la ou les droites (fictives) "i" contenant la ou les arêtes inférieures (la ou les plus basses) d'un module de la paire passe au-dessus de la ou les droites (fictives) "s" contenant la ou les arêtes supérieure (la ou les plus hautes) de l'autre module de la paire.

En considérant le volume des modules, c'est-à-dire en ne négligeant pas leur épaisseur, un module incliné n'a qu'une arête supérieure et une arête inférieure, tandis qu'un module vertical a (s'il est exactement vertical) deux arêtes supérieures et deux arêtes inférieures. Pour simplifier la compréhension, on fera référence à une seule arête (ce qui revient à, géométriquement, négliger l'épaisseur des modules verticaux.

L'arête inférieure d'un module d'une paire de modules est l'arête (d'un grand côté pour un rectangle) qui, parmi des arêtes ayant une extrémité commune la plus proche de l'autre module de la paire, est la plus basse.

L'arête supérieure d'un module d'une paire de modules est l'arête (d'un grand côté pour un rectangle) qui, parmi des arêtes ayant une extrémité commune la plus proche de l'autre module de la paire, est la plus haute.

De préférence, la droite fictive "p" contenant l'arête du petit côté d'un module vertical la plus proche du module incliné par-dessus lequel passe la droite contenant son arête inférieure ne dépasse pas, dans la direction montante de cette arête inférieure, le plan contenant le module incliné. Cela participe à minimiser l'ombrage des modules les uns sur les autres.

Pour faciliter la pose, l'angle 37 entre le plan dans lequel s'inscrit un module 31 et le plan dans lequel s'inscrit un module 32 est de préférence de 90°. Toutefois, selon un mode de réalisation particulier, cet angle 37 pourra être adapté de façon à orienter différemment les modules 32. L'angle 37 pourra alors être ouvert ou fermé sachant qu'un angle droit permettra le plus souvent une réduction maximum de l'encombrement de la centrale en minimisant l'ombrage pour une longueur donnée des grand côtés des modules 32.

De préférence, le petit côté 322 d'un module rectangulaire 32 fait un angle droit 35 avec les grands côtés 314 et 316 d'un module rectangulaire 31. Par ailleurs, l'angle 36 entre les grands côtés des modules 32 et les petits côtés des modules 31 est également de préférentiellement droit.

En supposant que chaque module 32 repose au sol par un de ses coins, les longueurs 12 et L2 des petits et grands côtés des modules 32 conditionnent la valeur de l'angle β. Pour minimiser les ombrages que les modules s'induisent les uns sur les autres, on recherchera de préférence un rapport 12/L2 faible. Toutefois, plus ce rapport est faible, moins la centrale est dense.

Selon un exemple préféré de dimensionnement, en supposant que les petits côtés des modules 31 et 32 sont de même longueur, le produit du rapport L2/12 par la tangente de l'angle β est égal à 2 (2*12/L2 = tan (β)). En pratique, le nombre de cellules 22 (figure 2) est un nombre entier. Par conséquent, le rapport L2/12 est arrondi à l'entier le plus proche. On choisit le nombre de modules dans l'une des deux longueurs et on en déduit le nombre de cellules dans l'autre longueur. De préférence, on cherche un nombre rationnel le plus proche du rapport L2/12. Puis, on choisit le numérateur, c'est-à-dire le nombre de cellules dans la largeur 12 du module, de préférence un nombre compatible avec l'industrie photovoltaïque, et on déduit le dénominateur associé, c'est-à-dire le nombre de cellules dans la largeur du module.

A titre d'exemple particulier de réalisation, pour une implantation dans une région prise arbitrairement aux environs de la ville de Grenoble (France) où la latitude est de l'ordre de 45,1° et où l'altitude du soleil à midi au solstice d'hiver est de l'ordre de 22,1°, on prévoira un rapport L2/12 égal à 4,9254, arrondi à 5.

Si les longueurs 11 et 12 ne sont pas égales, on déduit la taille des modules 32 de la relation (11+12)/L2 = tan (β). Bien qu'il soit préférable de fixer l'angle β par les dimensions 12 et L2, on peut également jouer sur la longueur 11 pour préserver l'angle 36 choisi (de préférence droit).

Dans l'exemple arbitraire de la figure 4, on suppose la présence de trois rangées 41, 42, 43 de trois éléments de base 3 côte à côte. Pour compenser la différence de hauteur au niveau de l'extrémité avant de la centrale, on ajoute préférentiellement une rangée supplémentaire 44 de modules inclinés 31. En variante, cette rangée de modules est remplacée par des pieds. Optionnellement, on prévoit, à l'arrière de la centrale, une ou plusieurs rangées 45 de modules 31. Dans ce dernier cas, il est préférable de prévoir des pieds à la manière des pieds 16 de la figure 1 pour maintenir ces deux rangées additionnelles. Enfin, des modules verticaux 32' additionnels terminent la centrale à l'extrémité libre des rangées. Comme il ressort de la figure 4, une particularité est que les modules verticaux 32 portent les modules inclinés 31. Les modules 31 ne reposent pas au sol mais reposent sur des tranches (de préférence les coins) de modules verticaux 32.

Le mode de réalisation préféré de la figure 4 tire profit de la présence de cadres rigides 24 (figure 2) en périphérie des modules bifaces. Ainsi, les modules verticaux 32 servent à maintenir inclinés les modules 31 qui, eux-mêmes, servent à tenir les modules 32.

Dans un mode de réalisation simplifié du premier aspect, les modules verticaux 32 reposent au sol par leurs grands côtés 326 ou, plus généralement, l'angle β ne respecte pas l'optimisation ci-dessus de réduction d'ombrage. Les modules verticaux servent cependant à maintenir les modules inclinés et, de préférence, les modules verticaux et inclinés se maintiennent mutuellement. Cela permet déjà de tirer profit de la présence d'une partie des cellules des modules 32.

La figure 5 est une vue partielle schématique d'un détail de réalisation d'un élément d'assemblage 5 entre des bords latéraux de deux modules verticaux 32 et d'un module incliné 31. Dans cet exemple, on utilise à chaque intersection, une tige 52 ayant approximativement une longueur de 11 plus deux fois 12. Les tiges 52 sont fixées au sol par exemple par l'intermédiaire de piètements 54. La tige 52 peut, à titre d'exemple particulier de réalisation, comporter des gorges de réception des bords latéraux des modules ou des moyens de fixation de ces bords latéraux.

La figure 6 est une vue en perspective schématique d'un autre mode de réalisation selon lequel la structure même des modules 32 et 31 (les petits côtés des cadres 14 et 24) forme, en quelque sorte, les tiges d'assemblage. On prévoit, par exemple, des éléments d'assemblage 7 et 8 des coins des modules entre eux.

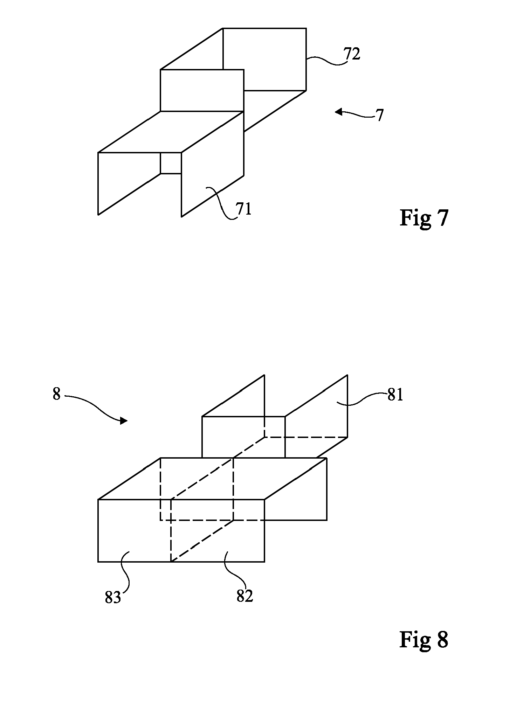

La figure 7 est une vue schématique d'un mode de réalisation d'un élément d'assemblage 7, plus particulièrement destiné aux bords des rangées.

La figure 8 est une vue schématique d'un mode de réalisation d'un élément d'assemblage 8, plus particulièrement destiné à assembler deux modules inclinés avec un module vertical.

Les éléments d'assemblage 7 et 8 sont formés, dans cet exemple, de cubes 71, 72 et 81, 82, 83, ouverts chacun sur deux faces destinées à recevoir un coin d'un module. Les représentations des figures 7 et 8 sont très schématiques et illustrent que l'assemblage des modules peut être particulièrement simple à l'aide de raccords d'extrémité. Il pourra s'agir de tout élément d'assemblage de coins (par exemple avec une forme extérieure sphérique, une forme d'équerre, etc.). On peut aussi prévoir que les modules eux-mêmes soient équipés d'éléments d'assemblage adaptés.

Un avantage qu'il y a à utiliser les cadres (généralement métalliques) regroupant des cellules photovoltaïques pour former un module est que cela diminue le nombre et le coût des éléments porteurs nécessaires à la tenue du système, de type jambes de force, étais, ou pieds pour réaliser la centrale. De tels éléments ne sont toutefois pas à exclure dans un mode de réalisation se focalisant sur le second aspect.

Un autre avantage est que l'on met à profit l'intervalle entre les rangées de modules inclinés pour disposer des modules verticaux, de préférence bifaces, et accroître ainsi la production d'énergie de la centrale.

Un autre avantage est que la superposition de deux systèmes de modules verticaux et de modules inclinés vient associer différents maximums de production d'énergie au cours de la journée, ce qui lisse la production d'énergie sur la journée.

Un autre avantage est que le nombre d'ancrages au sol de la structure est réduit. En effet, le fait que les modules soient assemblés les uns aux autres conduit à ce qu'un nombre réduit d'ancrages au sol (pieds 54) peut être utilisé. En pratique, on préférera prévoir quand même au moins 3 ancrages par centrale.

On notera que l'utilisation de modules bifaces 32 peut être optimisée par une bonne réflexion diffusive de la lumière par le sol. Typiquement, on choisira un sol le plus clair et réfléchissant possible.

Divers modes de réalisation ont été décrits, diverses variantes et modifications apparaîtront à l'homme de l'art. En particulier, le choix des dimensions à donner aux modules photovoltaïques et donc aux éléments de base en fonction de la taille des modules qui les composent et de l'implantation de la centrale est à la portée de l'homme du métier à partir des indications fonctionnelles données ci-dessus. De plus, la réalisation pratique des éléments d'assemblage des cadres des modules entre eux afin de tirer profit de la structure porteuse de ces modules est également à la portée de l'homme du métier à partir de ces indications fonctionnelles. En outre, bien que l'association de modules verticaux biface et de modules inclinés simple face constitue un mode de réalisation préféré, toutes les combinaisons sont envisageables. On peut, par exemple, envisager que tout ou partie des modules verticaux soient simple face et le reste biface ou bien que et tout ou partie des modules inclinés soient double face et le reste simple face, voire que tous les modules soient simple face ou biface. Enfin, lorsque l'on a fait référence à une position angulaire donnée, cela signifie que l'on préfère une position ou un angle exact aux tolérances de fabrication ou de pose près. Lorsque que l'on se réfère à une position (par exemple la position approximativement verticale des modules 32) ou à un angle approximatif, cela signifie à plus ou moins 10 degrés et, de préférence à plus ou moins 5 degrés. De même, lorsque l'on a fait référence à des dimensions identiques, cela signifie égales aux tolérances de fabrication et de pose près. Lorsque l'on se réfère à des dimensions approximatives, cela signifie à plus ou moins 10%, de préférence à plus ou moins 5%.

## Revendications

1. Centrale solaire comportant :
des premiers modules photovoltaïques (31) inclinés par rapport à un plan horizontal, chaque premier module comportant une arête inférieure et une arête supérieure ; et
des deuxièmes modules photovoltaïques (32) dans un plan approximativement vertical, chaque deuxième module comportant une arête inférieure et une arête supérieure,
dans laquelle, pour toute paire de modules incluant un module vertical et un module incliné :
une droite fictive contenant l'arête inférieure d'un module situé en haut de la paire passe au-dessus d'une droite fictive contenant une arête supérieure de l'autre module situé en bas de la paire ; **caractérisée en ce que**
au moins un petit côté (312) de chaque premier module (31) est aligné sur un petit côté (322) d'au moins un deuxième module (32), sans que ces côtés ne se chevauchent.

2. Centrale selon la revendication 1, dans laquelle les modules (31, 32) sont rectangulaires.

3. Centrale selon l'une quelconque des revendications 1 à 2, dans laquelle la normale des premiers modules (31) fait, par rapport à un plan horizontal, un angle approximativement égal, de préférence égal, à l'élévation du soleil à midi au solstice d'hiver du lieu d'implantation.

4. Centrale selon l'une quelconque des revendications 1 à 3, dans laquelle les plus grands côtés des deuxièmes modules sont approximativement alignés, de préférence alignés, avec l'élévation du soleil à midi au solstice d'hiver du lieu d'implantation.

5. Centrale selon l'une quelconque des revendications 1 à 4, dans laquelle les premiers (31) et deuxièmes (32) modules servent à se maintenir mutuellement.

6. Centrale selon l'une quelconque des revendications 1 à 5, dans laquelle les premiers modules et/ou les deuxièmes modules sont bifaces.

7. Centrale selon l'une quelconque des revendications 1 à 6, dans laquelle le rapport entre la longueur (12) des petits côtés et celle (L2) des grands côtés des deuxièmes modules (32) dépend de la tangente de l'élévation du soleil à midi lors du solstice d'hiver sur le lieu d'implantation.

8. Centrale selon la revendication 7, dans laquelle ledit rapport est égal à la moitié de la tangente de l'élévation du soleil à midi au solstice d'hiver.

9. Centrale selon l'une quelconque des revendications 1 à 8, dans laquelle les petits côtés des modules sont parallèles entre eux.

10. Centrale selon l'une quelconque des revendications 1 à 9, dans laquelle les petits côtés (312, 322) des premiers (31) et deuxièmes (32) modules sont approximativement de même longueur, de préférence de même longueur.

11. Centrale selon l'une quelconque des revendications 1 à 10, dans laquelle des cadres (14, 24) constituant la structure des modules (31, 32) servent de structure à l'ensemble de la centrale.

12. Centrale selon l'une quelconque des revendications 1 à 11, comportant :
au moins deux rangées (41, 42, 43) de premiers modules (31), les rangées étant parallèles entre elles ; et
par rangée, au moins deux deuxièmes modules (32).

## Patentansprüche

1. Ein Solarkraftwerk, das Folgendes aufweist:
erste Photovoltaikmodule (31), die bezogen auf eine horizontale Ebene geneigt sind, wobei jedes erste Modul eine untere Kante und eine obere Kante aufweist; und
zweite Photovoltaikmodule (32) in einer ungefähr vertikalen Ebene, wobei jedes zweite Modul eine untere Kante und eine obere Kante aufweist;
wobei für jedes Paar von Modulen, dass eine vertikales Modul und eine geneigtes Modul aufweist:
eine imaginäre Linie, welche die untere Kante eines Moduls enthält, das sich bei dem Paar oben befindet, über eine imaginären Linie verläuft, die eine obere Kante des anderen Moduls enthält, das sich bei dem Paar unten befindet, **dadurch gekennzeichnet, dass**
mindestens eine schmale Seite (312) jedes ersten Moduls (31) an einer schmalen Seite (322) von mindestens einem zweiten Modul (32) ausgerichtet ist, und zwar ohne dass sich diese Seiten überlappen.

2. Kraftwerk nach Anspruch 1, wobei die Module (31, 32) rechteckig sind.

3. Kraftwerk nach einem der Ansprüche 1 bis 2, wobei die Normale für die ersten Module (31) in Bezug auf eine horizontale Ebene, einen Winkel bildet, der ungefähr gleich oder bevorzugt gleich ist zu dem Elevationswinkel der Sonne am Mittag während der Wintersonnenwende an dem Installationsstandort.

4. Kraftwerk nach einem der Ansprüche 1 bis 3, wobei die größten Seiten der zweiten Module ungefähr ausgerichtet oder bevorzugt gleich ausgerichtet sind zu der Höhe bzw. Elevation der Sonne am Mittag während der Wintersonnenwende an dem Installationsstandort.

5. Kraftwerk nach einem der Ansprüche 1 bis 4, wobei die ersten (31) und zweiten (32) Module genutzt werden, sich gegenseitig zu halten.

6. Kraftwerk nach einem der Ansprüche 1 bis 5, wobei die ersten Module und/oder die zweiten Module zweiflächig sind.

7. Kraftwerk nach einem der Ansprüche 1 bis 6, wobei das Verhältnis der Länge (12) der schmalen Seiten zu dem (L2) der langen Seiten der zweiten Module (32) von der Tangente des Elevationswinkels der Sonne am Mittag während der Wintersonnenwende an dem Installationsstandort abhängt.

8. Kraftwerk nach Anspruch 7, wobei das Verhältnis gleich der Hälfte der Tangente des Elevationswinkels der Sonne am Mittag während der Wintersonnenwende ist.

9. Kraftwerk nach einem der Ansprüche 1 bis 8, wobei die schmalen Seiten der Module parallel zueinander sind.

10. Kraftwerk nach einem der Ansprüche 1 bis 9, wobei die schmalen Seiten (312, 322) der ersten (31) und zweiten (32) Module ungefähr die gleiche Länge haben, und bevorzugt die gleiche Länge haben.

11. Kraftwerk nach einem der Ansprüche 1 bis 10, wobei Rahmen (14, 24), welche die Struktur der Module (31, 32) bilden, als Struktur für das gesamte Kraftwerk genutzt werden.

12. Kraftwerk nach einem der Ansprüche 1 bis 11, das folgendes aufweist:
mindestens zwei Reihen (41, 42, 43) erster Module (31), wobei die Reihen parallel zueinander sind; und
per Reihe, mindestens zwei zweite Module (32).

## Claims

1. A solar power plant comprising:
first photovoltaic modules (31) inclined with respect to a horizontal plane, each first module comprising a lower edge and an upper edge; and
second photovoltaic modules (32) in an approximately vertical plane, each second module comprising a lower edge and an upper edge,
wherein, for any pair of modules including a vertical module and an inclined module:
an imaginary line containing the lower edge of a module located at the top of the pair runs above an imaginary line containing an upper edge of the other module located at the bottom of the pair; **characterized in that**
at least one small side (312) of each first module (31) is aligned on a small side (322) of at least one second module (32), without for these sides to overlap.

2. The power plant of claim 1, wherein the modules (31, 32) are rectangular.

3. The power plant of any of claims 1 to 2, wherein the normal to the first modules (31) forms, with respect to a horizontal plane, an angle approximately equal, preferably equal, to the elevation angle of the Sun at noon during the winter solstice of the implantation site.

4. The power plant of any of claims 1 to 3, wherein the largest sides of the second modules are approximately aligned, preferably aligned, with the elevation of the Sun at noon during the winter solstice of the implantations site.

5. The power plant of any of claims 1 to 4, wherein the first (31) and second (32) modules are used to mutually hold each other.

6. The power plant of any of claims 1 to 5, wherein the first modules and/or the second modules are bifacial.

7. The power plant of any of claims 1 to 6, wherein the ratio of the length (12) of the small sides to that (L2) of the large sides of the second modules (32) depends on the tangent of the elevation angle of the Sun at noon during the winter solstice on the implantation site.

8. The power plant of claim 7, wherein said ratio is equal to half the tangent of the elevation angle of the Sun at noon during the winter solstice.

9. The power plant of any of claims 1 to 8, wherein the small sides of the modules are parallel to one another.

10. The power plant of any of claims 1 to 9, wherein the small sides (312, 322) of the first (31) and second (32) modules have approximately the same length, preferably the same length.

11. The power plant of any of claims 1 to 10, wherein frames (14, 24) forming the structure of the modules (31, 32) are used as a structure for the entire power plant.

12. The power plant of any of claims 1 to 11, comprising:
at least two rows (41, 42, 43) of first modules (31), the rows being parallel to one another; and
per row, at least two second modules (32).
